# FASCICULE DE BREVET EUROPEEN

(11) **EP 3 598 102 B1**
(45) Date de publication et mention de la délivrance du brevet: **12.02.2025**
(21) Numéro de dépôt: 19186065.9
(22) Date de dépôt: 12.07.2019
(51) Int. Cl.: G01N 15/0205, G01N 15/1434, G01N 15/14, G01N 15/00, G01N 1/22

(54) **DÉTECTEUR OPTIQUE DE PARTICULES**
OPTISCHER TEILCHENDETEKTOR
OPTICAL PARTICLE SENSOR

(30) Priorité: 16.07.2018 FR 1856536
(43) Date de publication de la demande: 22.01.2020
(73) Titulaire: Commissariat à l'Energie Atomique et aux Energies Alternatives, 75015 Paris (FR)
(72) Inventeur: JOBERT, Gabriel, 38054 Cedex 9 GRENOBLE (FR)
(74) Mandataire: Hautier IP

(56) Documents cités:
- EP-A2- 1 987 389
- US-A- 5 719 667
- US-A1- 2011 223 586
- US-A1- 2014 226 158
- US-A1- 2016 077 218
- US-B1- 6 198 110

## Description

### DOMAINE TECHNIQUE DE L'INVENTION

La présente invention concerne le domaine de la détection optique de particules en général et plus particulièrement de particules de taille micrométrique, voire nanométrique. Elle trouvera pour application particulièrement avantageuse, mais non limitative, le contrôle de la qualité de l'air, la détection d'espèces microbiologiques, la détection de poudre d'explosifs ainsi que les systèmes d'alarme tels que ceux identifiant les particules de fumée pour détecter les incendies.

### ETAT DE LA TECHNIQUE

Les détecteurs de particules sont généralement basés sur l'analyse de la diffusion de la lumière par des particules. Ces détecteurs comportent ainsi généralement des capteurs optiques configurés pour mesurer la diffusion de la lumière par les particules.

Les détecteurs comprennent une source de lumière qui éclaire un canal à travers lequel passent les particules à détecter.

Si des particules sont présentes dans la zone éclairée, celles-ci vont à la fois absorber la lumière qui provient de la source et vont dévier cette lumière hors de la direction principale de propagation selon le phénomène de diffusion. L'efficacité angulaire de diffusion est caractéristique de la forme, de la taille, de l'indice optique et de la concentration des particules. L'enregistrement de cette efficacité angulaire de diffusion permet donc d'analyser ces différents paramètres des particules.

Concernant la détection optique de particules, il existe deux principales méthodes de détection.

La première méthode est une mesure dite d'obscuration, c'est-à-dire la mesure de l'absorption de la lumière à travers un nuage de particules ou une accumulation de particules. Cette mesure permet de déterminer la concentration des particules à l'aide de la loi de Beer-Lambert si on connait a priori la composition du nuage de particules.

La deuxième méthode est une mesure de lumière diffusée hors de l'axe optique. Cette mesure permet de déterminer la concentration de particules selon les théories de diffusion de la lumière, par exemple la théorie de Mie (Réf : Bohren et Huffmann, Absorption and scattering of light by small particles, Ed. Wiley and Sons, 1983). Pour analyser la nature des particules du nuage, on peut par exemple procéder à une mesure angulaire de la diffusion, par exemple à l'aide d'un goniomètre constitué d'un photodétecteur monté sur un bras rotatif, ou bien à l'aide d'un assemblage discret de photodétecteurs.

Ce type de détecteur présente pour inconvénients d'être très complexe, très onéreux et peu robuste. Ainsi, il ne peut pas être transporté aisément. Par ailleurs il ne peut pas être envisagé pour équiper des systèmes d'alarme ou de mesure à coût faible. Or, par exemple pour le domaine de la détection des incendies dans les habitations ou pour le domaine du contrôle de la qualité de l'air, il est indispensable de proposer des solutions dont les coûts sont faibles et dont la robustesse est élevée.

D'autres méthodes de détection optique ont également été proposées.

Par exemple, les compteurs optiques de particules fonctionnent sur les deux principes cités au-dessus, à la particularité près que la zone d'interaction particule-lumière est limitée géométriquement par la focalisation d'une source laser et/ou par un canal micro-fluidique. Cette limitation géométrique de la zone active permet de détecter des particules uniques plutôt que des nuages.

D'autres méthodes optiques consistent à observer des particules par traitement d'images obtenues par microscopie ou bien par reconstruction holographique.

Ces méthodes présentent également une robustesse relativement faible et un coût élevé.

Le document US 5,719,667 décrit un détecteur de particules pour cytomètre. Ce détecteur comprend une cellule 110 traversée par un fluide comprenant des particules. Un système optique permet de faire converger sur un même photodétecteur des rayons diffusés par une même particule dans des directions différentes.

Le document EP 1 987 389 décrit un cytomètre. Des lentilles collimatent des rayons issus d'un canal vers un photodétecteur.

Le document US 2014/0226158 décrit un dispositif pour déterminer les caractéristiques de particules.

Ces systèmes ne permettent pas une détection précise des particules.

Afin d'améliorer la robustesse des détecteurs de particules et de réduire leur coût, des solutions ont été proposées pour intégrer des détecteurs optiques dans des puces à l'aide des technologies de la microélectronique et de la photonique.

Le document FR2963101 décrit une telle solution. Cette solution prévoit une source de lumière véhiculée par un guide d'ondes qui illumine un canal gravé dans un substrat de silicium et à travers lequel des particules vont circuler. La diffraction de la lumière incidente par ces particules est détectée par deux photodétecteurs périphériques réalisés sur le substrat de silicium.

Cette solution permet de réduire l'encombrement du capteur. En revanche, il est extrêmement difficile avec ce type de solution d'obtenir des informations suffisamment précises et complètes sur les particules.

Il est notamment difficile, voire impossible, d'analyser ou de déterminer la nature des particules.

Le document US2016/0077218 A1 décrit également un détecteur formé sur une puce et comprenant une matrice de photodétecteurs utilisée pour réaliser une image directe du rayonnement diffusé par les particules. Avec cette solution également, il est délicat d'analyser ou de déterminer précisément la nature des particules.

Il existe encore d'autres méthodes, cette fois-ci non-optiques, pour détecter des particules.

Parmi ces méthodes non-optiques de détection, la mesure gravimétrique consiste à mesurer la masse d'une accumulation de particules. Une variante consiste à mesurer la masse d'une particule unique à l'aide d'une balance oscillante.

Une autre méthode non-optique, la détection de particules par ionisation, consiste à mesurer la variation du courant induit par une chambre d'air ionisée lorsqu'il y a présence de particules. Par ailleurs, la mesure par atténuation beta consiste à mesurer l'atténuation d'une source radioactive beta à travers un nuage de particules à l'aide d'un compteur Geiger.

Les méthodes non-optiques proposées jusqu'à ce jour présentent cependant des niveaux de complexité encore supérieurs aux méthodes de détection optique.

Il existe donc un besoin consistant à proposer une solution pour améliorer la précision des informations relatives aux particules, afin par exemple de déterminer leur nature, tout en présentant un niveau de complexité ou un coût limité et un temps de réponse satisfaisant.

Tel est l'objectif de la présente invention.

### RESUME DE L'INVENTION

La présente invention concerne un détecteur de d'après la revendication 1 et un procédé de fabrication du détecteur d'après la revendication 13, le détecteur comprenant au moins :
∘ un canal destiné à recevoir au moins un fluide comprenant des particules et configuré pour recevoir au moins un rayonnement lumineux incident émis par une source lumineuse;
∘ au moins un réseau de photodétecteurs configuré de sorte qu'au moins certains des photodétecteurs reçoivent des rayons lumineux provenant de la source et diffusés par les particules présentes dans le canal.

Le détecteur comprend en outre au moins un système optique destiné à être traversé par une partie au moins des rayons lumineux après leur diffusion par les particules et avant leur réception par les photodétecteurs.

Chaque système optique est associé à un réseau de photodétecteurs et présente au moins un plan focal image.

Le détecteur est configuré de sorte à ce que, pour chaque système optique, ledit plan focal image soit optiquement couplé au réseau de photodétecteurs de sorte que tous les rayons diffusés par les particules selon des directions parallèles avant de traverser le système optique parviennent, après la traversée du système optique, en un même point du réseau de photodétecteurs associé à ce système optique.

L'au moins un système optique est convergent de sorte à faire converger les rayons lumineux issus de la source et non diffusés par les particules vers un foyer image situé sur le plan focal image du système optique.

Le détecteur comprend une pluralité de systèmes optiques, chaque système optique étant associé à un réseau de photodétecteurs, la pluralité de systèmes optiques étant disposée de sorte à s'étendre autour d'une partie au moins du canal.

Cela permet de collecter au niveau du réseau de photodétecteurs des rayons lumineux diffusés selon un angle de diffusion plus grand, en particulier si les systèmes optiques sont disposés de manière continue, ou selon plusieurs angles de diffusion discrets si les systèmes optiques ne sont pas disposés de manière continue. L'invention permet ainsi d'augmenter le diagramme de diffraction auquel l'on a accès. On parvient ainsi à collecter plus d'information sur les particules. Les précisions de l'analyse et de l'identification de la nature des particules sont ainsi améliorées.

Ainsi, l'au moins un système optique est convergent de sorte à faire converger les rayons lumineux le traversant sur le réseau de photodétecteurs associé à ce système optique.

Le système optique n'est en revanche pas configuré de manière à collimater les rayons.

L'association du canal, de l'au moins un réseau de photodétecteurs et de l'au moins un système optique permet d'améliorer significativement la précision de la détection et de l'analyse des particules présentes dans le canal, tout en offrant un temps de réponse rapide.

En effet, le détecteur revendiqué permet de ne pas éblouir les photodétecteurs avec le faisceau de la source ou bien d'éblouir une zone réduite des photodétecteurs. Bien souvent, le faisceau produit par la source, surtout lorsqu'il est collimaté à son arrivée sur la particule, présente une puissance optique de plusieurs ordres de grandeur supérieure à la puissance des rayons diffusés par les particules. Les photodétecteurs recevant le faisceau de la source ne permettent donc pas d'identifier des rayons diffusés. Réduire la zone d'aveuglement permet alors de mesurer la diffusion de particules pour les faibles angles de déviation, c'est-à-dire pour les rayons diffusés très proches du faisceau. L'invention permet ainsi de fournir une information plus riche concernant la diffusion des particules. L'invention permet donc d'améliorer la précision de la détection et de l'analyse.

Par ailleurs, le détecteur selon l'invention présente possiblement un canal de grande dimension, typiquement une grande largeur de canal (dimension maximale mesurée dans un plan perpendiculaire à son axe principal d'extension). Cela permet de faciliter le déplacement du fluide et donc des particules à l'intérieur du canal, par convection naturelle et même en l'absence de pompe, ce qui est indispensable pour détecter et/ou analyser rapidement les particules.

Pour autant, grâce au détecteur revendiqué, cette dimension importante de canal ne crée pas de flou de position des particules ou crée un flou très limité.

En effet avec un détecteur conventionnel ne présentant pas de système optique tel que celui du détecteur selon l'invention, si un nuage contient des particules situées à des positions aléatoires et que ces particules projettent des diagrammes de diffusions translatés selon leurs positions relatives et si les distances qui séparent les photodétecteurs sont du même ordre de grandeur que les distances qui séparent les particules du nuage, alors un flou de position est attendu. Ce flou de position est d'autant plus important que la largeur du canal est grande. Ce flou de position entraine une diminution de la sensibilité du capteur ainsi qu'une perte de contraste de l'information portée par le diagramme de rayonnement des particules.

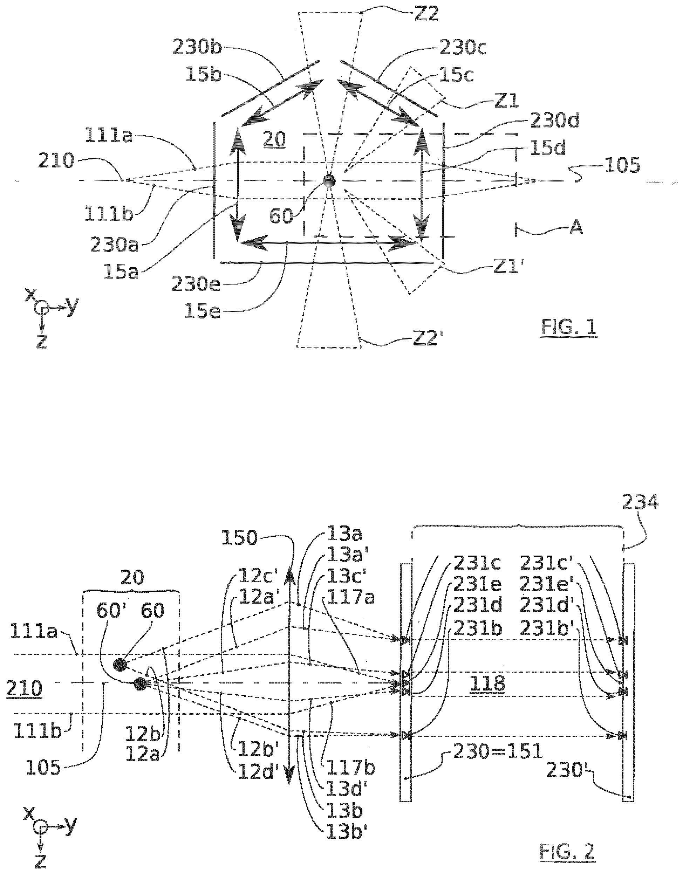

La figure 2 illustre de manière très schématique une solution au problème du flou de position et à la zone d'aveuglement. Dans l'exemple illustré sur cette figure 2, l'imageur, c'est-à-dire le réseau 230 de photodétecteurs 231 coïncide avec le plan focal image 151 du système optique 15.

Cette figure sera décrite plus en détail dans la description détaillée qui suit. Néanmoins, il apparaît immédiatement sur cette figure 2, que grâce au système optique 15, tous les rayons diffusés 12a, 12a' par les particules 61, 61' selon des directions parallèles parviennent en un même point du réseau 230 de photodétecteurs 231. Dans cet exemple le photodétecteur 231a reçoit donc tous les rayons lumineux 12a, 12a' diffusés par les particules 60, 60' selon des directions parallèles.

Par ailleurs, le détecteur revendiqué permet que la zone du réseau 230 de photodétecteurs 231 qui est impactée par le faisceau principal, c'est-à-dire la zone d'aveuglement 118, soit ponctuelle sur le plan focal image 151 (si le faisceau de la source est collimaté) ou tout au plus présente une surface très réduite (notamment si le faisceau de la source n'est pas collimaté). Cette zone correspond au foyer image situé sur le plan focal image 151. Ainsi, très peu de photodétecteurs 231e sont aveuglés. Par ailleurs, des rayons lumineux 12c', 12d' diffusés avec des angles très faibles autour de la direction principale de propagation 105 du rayonnement lumineux incident reçu par le canal 20 seront détectés. En effet les photodétecteurs 231c, 231d, qui reçoivent ces rayons lumineux 12c', 12d', ne sont pas aveuglés.

Ainsi, avec le détecteur revendiqué, tous les rayons lumineux diffusés qui sont orientés suivant la même direction tombent sur un seul et même point de l'imageur. Les rayons lumineux diffusés qui sont orientés suivant deux angles différents en parvenant sur le système optique tombent sur deux points distincts de l'imageur. Tous les rayons lumineux diffusés qui sont orientés en formant un même angle (i.e., même angle de diffusion) en parvenant sur le système optique direction tombent sur l'imageur en étant répartis sur un même cercle. Ces rayons diffusés par une même particule selon des directions non parallèles mais selon un même angle de diffusion parviennent ainsi sur un même cercle de l'imageur.

Ainsi, les rayons diffusés par une même particule atteignent des photodétecteurs selon des cercles ou des arcs de cercle concentriques en fonction de leurs angles respectifs de diffraction.

Ainsi l'image obtenue est une image angulaire de la diffusion d'un nuage de particules, et cette image est indépendante de la position individuelle de chaque particule. On peut ainsi considérer que l'image obtenue est une transformée de Fourier spatiale du rayonnement du nuage.

Par conséquent, par rapport aux solutions comme celles décrites dans les antériorités FR2963101 ou US2016/0077218 A1 mentionnées ci-dessus, l'invention propose une solution particulièrement efficace pour améliorer la précision ou la sensibilité des informations relatives aux particules, afin par exemple de déterminer leur nature, tout en présentant un niveau de complexité limité, un coût limité et un temps de réponse satisfaisant.

On notera que selon un mode de réalisation de l'invention, chaque système optique n'est pas nécessairement convergent. On peut ainsi n'avoir aucun système optique qui est configuré de sorte à faire converger les rayons lumineux le traversant. Dans ce cas, le détecteur ne présente pas les avantages mentionnés ci-dessus relatifs à la réduction de la zone d'aveuglement.

La présente invention concerne aussi un système comprenant un détecteur selon l'une quelconque des revendications précédentes dans lequel le système est pris parmi :
- un système d'alarme anti-incendie,
- un système de détection d'incendie,
- un système d'analyse de la qualité d'un fluide tel que l'air ou l'eau,
- un système d'alarme anti-pollution,
- un système de détection de poudre d'explosifs,
- un système de détection d'espèces microbiologiques.

La présente invention concerne aussi un procédé de fabrication d'un détecteur de particules, comprenant au moins les étapes suivantes :
∘ Fournir au moins un circuit optique comprenant au moins un système optique, de préférence une pluralité de systèmes optiques,
∘ Fournir au moins un circuit optronique comprenant au moins un substrat portant au moins un réseau de photodétecteurs et de préférence une pluralité de réseaux de photodétecteurs.
∘ Superposer le circuit optique et le circuit optronique de manière à ce ledit plan focal image du système optique soit optiquement couplé au réseau de photodétecteurs de sorte que tous les rayons diffusés par les particules selon des directions parallèles avant de traverser le système optique parviennent, après traversée du système optique, en un même point du réseau de photodétecteurs associé à ce système optique.

Ce procédé a pour avantage, entre autres, d'être aisément reproductible et de permettre l'obtention d'un détecteur précis à un coût limité.

Selon un mode de réalisation, à un point du plan focal image de chaque système optique correspond un unique point du réseau de photodétecteurs associé à ce système optique.

Selon un mode de réalisation optionnel, le circuit optique comprend en outre également un passage et le circuit optronique comprend en outre une ouverture, et dans lequel l'étape de superposition du circuit optique et du circuit optronique est effectuée de sorte à disposer en regard le passage et l'ouverture pour définir en partie au moins le canal.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La **figure 1** est un schéma illustrant la structure asymétrique des systèmes optiques par rapport à la direction principale de propagation. Dans cet exemple non limitatif, le détecteur comprend cinq systèmes optiques.
La **figure 2** illustre, de manière très schématisée et de manière agrandie, une portion de la figure 1. Cette figure 2 illustre clairement les avantages qu'offre l'invention en termes de réduction du flou angulaire et de réduction de la zone d'aveuglement.
**La** **figure 3** est une vue en coupe dans le plan (x, y) d'un exemple non limitatif de détecteur de particules selon l'invention.
Les **figures 4a et 4b** illustrent, de manière très schématisée, des vues du dessus du circuit optique et du circuit optronique du détecteur selon l'exemple illustré en figure 3.
Les **figures 5a à 5e** illustrent des étapes d'un exemple de procédé de formation du circuit optique équipant le détecteur selon le mode de réalisation illustré en figure 3.
Les **figures 6a et 6b** illustrent des étapes d'un exemple de procédé de formation du circuit optronique équipant le détecteur selon le mode de réalisation illustré en figure 3.
La **figure 7** illustre l'étape d'assemblage du circuit optique et du circuit optronique obtenu à l'issue des étapes représentées sur les figures 5e et 6b.
La **figure 8a****,** illustre, de manière très schématique, le système optique équipant le circuit optique utilisé dans les modes de réalisation représentés sur les figures 3, 5a à 5e et 7.
La **figure 8b****,** illustre, de manière très schématique, un système optique alternatif à celui représenté en figure 8a.
La **figure 9** est un schéma illustrant un mode de réalisation alternatif à celui de la figure 1. Sur cette figure 9, la structure asymétrique des systèmes optiques comprend sept systèmes optiques répartis autour du canal.
La **figure 10** est un schéma illustrant un mode de réalisation alternatif à celui de la figure 1. Sur cette figure 10, la structure asymétrique des systèmes optiques comprend trois systèmes optiques répartis autour du canal. Par souci de concision, sur ces figures 9 et 10 les réseaux de photodétecteurs ne sont pas représentés.

Les dessins joints sont donnés à titre d'exemples et ne sont pas limitatifs de l'invention. Ces dessins sont des représentations schématiques et ne sont pas nécessairement à l'échelle de l'application pratique. En particulier les dimensions relatives des différentes couches, systèmes optiques, surfaces réfléchissantes, canal, photodétecteurs et autres structures ne sont pas représentatives de la réalité.

### DESCRIPTION DETAILLEE DE L'INVENTION

Il est précisé que dans le cadre de la présente invention, le terme « sur », « surmonte », « recouvre » ou « sous-jacent » ou leurs équivalents ne signifient pas « au contact de ». Ainsi par exemple, le dépôt d'une première couche sur une deuxième couche, ne signifie pas obligatoirement que les deux couches sont directement au contact l'une de l'autre mais cela signifie que la première couche recouvre au moins partiellement la deuxième couche en étant soit directement à son contact, soit en étant séparée d'elle par au moins une autre couche ou au moins un autre élément..

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

Dans le cadre de la présente invention, le terme « particule », ou ses équivalents, a pour définition un constituant d'un système physique considéré comme élémentaire par rapport aux propriétés étudiées. Par exemple, une particule est un élément de matière dont la plus grande dimension est inférieure à quelques millimètre (10⁻³ mètres), de préférence à un millimètre, et de préférence à quelques dizaines de micromètres (10⁻⁶ mètres) et de préférence inférieure au micromètre, voire de l'ordre du nanomètre (10⁻⁹ m). Plus généralement, les particules présentent une taille 40 Å (10⁻¹⁰ m) et sont donc considérées comme optiquement continue. De manière générale, il s'agit d'objets composés de matière dont les dimensions sont petites par rapport aux dimensions du canal de circulation des particules.

Dans ce qui suit, le terme « diffraction », « diffusion » ou leurs équivalents se réfèrent au phénomène par lequel un milieu de propagation produit une répartition, dans de nombreuses directions, de l'énergie d'une onde électromagnétique, lumineuse par exemple.

Dans la présente description, un matériau est considéré comme transparent dès lors qu'il laisse passer au moins 50% d'un rayonnement lumineux, de préférence au moins 75% et avantageusement au moins 90%.

Dans ce qui suit, le terme « réflexion » ou ses équivalents se réfère au phénomène de réémission depuis un élément ou une surface d'un rayonnement lumineux incident. Dans la présente description, un élément est considéré comme réfléchissant dès lors qu'il réémet une partie au moins d'un rayonnement lumineux incident, cette partie étant supérieure ou égale à 50%. Un coefficient de réflectivité varie de 0% pour un élément non réfléchissant à 100% pour un élément réfléchissant entièrement un rayonnement lumineux incident.

Avant d'entamer une revue détaillée de modes de réalisation de l'invention, sont énoncées ci-après des caractéristiques optionnelles qui peuvent éventuellement être utilisées en association ou alternativement :
- Selon un exemple, l'au moins un système optique présente un axe optique et l'au moins un système optique est convergent de sorte à faire converger en direction de l'axe optique les rayons lumineux avant leur arrivée sur le réseau de photodétecteurs.
- Le détecteur est configuré de sorte à ce que, de préférence pour chaque système optique, ledit plan focal image soit optiquement couplé au réseau de photodétecteurs de sorte que des rayons diffusés par les particules selon des directions différentes avant d'atteindre et donc avant de traverser le système optique parviennent, après la traversée du système optique, sur des points distincts du réseau de photodétecteurs associé à ce système optique. Ainsi si la taille des photodétecteurs est suffisamment petite, les rayons diffusés par les particules selon des directions différentes avant d'atteindre le système optique parviennent, après la traversée du système optique, sur des photodétecteurs distincts du réseau de photodétecteurs. Le détecteur est alors capable de d'identifier et différencier des rayons diffusés selon des angles de diffusion différents.
- Le détecteur est configuré de sorte que ledit plan focal image du système optique soit optiquement couplé au réseau de photodétecteurs de sorte que tous les rayons diffusés par une particule selon des directions non parallèles et selon un même angle de diffusion, avant de parvenir au système optique, et donc avant de traverser le système optique parviennent, après traversée du système optique, en des points distincts du réseau de photodétecteurs associé à ce système optique, ces points étant situés sur un même cercle.

On peut ainsi reconstituer un diagramme complet de diffusion. On peut par exemple obtenir une valeur représentative de l'intensité diffusée pour chaque angle de diffusion. Cela permet de fournir une analyse très précise des particules.
- Le système optique est convergent de sorte à faire converger les rayons lumineux issus de la source vers au moins un foyer image situé sur le plan focal image du système optique. Plus précisément, le système optique est convergeant,
   ∘ de sorte à ce que les rayons lumineux issus de la source et qui n'ont pas été déviés par les particules convergent vers un foyer image, désigné foyer image principal et situé sur le plan focal image ;
   ∘ et de sorte à ce que les rayons diffusés par les particules convergent eux vers d'autres foyers image, désignés foyers image secondaires, qui sont situés sur le plan focal image.
- Chaque système optique est associé à un réseau de photodétecteurs et présente un unique plan focal image.
- Selon un exemple de réalisation, chaque système optique est convergent de sorte à faire converger les rayons lumineux traversant chaque système optique. Ainsi, à la fois le flou et la zone d'aveuglement sont considérablement réduits.
- Le détecteur ne comprend pas d'élément optique entre le système optique et les particules. Autrement dit, tous les éléments modifiant les rayons diffusés, en particulier leur direction, appartiennent au système optique.
- Selon un exemple, ledit plan focal image du système optique est optiquement couplé au réseau de photodétecteurs de sorte que chaque point du plan focal image du système optique corresponde optiquement, selon une fonction bijective, à un point du réseau de photodétecteurs associé à ce système optique.
   Il y a une correspondance bijective entre chaque point du plan focal image de l'au moins un système optique et chaque point du réseau de photodétecteurs.
- Selon un exemple, le plan focal image du système optique est confondu avec les photodétecteurs du réseau de photodétecteurs associé à ce système optique.
   Ainsi, dans ce mode de réalisation l'imageur est placé au plan focal image de l'optique, typiquement d'une lentille convergente de l'optique. Il s'agit donc du couplage le plus direct. Cela permet de rendre plus fiable le procédé de réalisation et de réduire l'encombrement du détecteur.
- Selon un exemple, le plan focal image du système optique est situé à distance (c'est-à-dire à une distance non nulle) des photodétecteurs du réseau de photodétecteurs associé à ce système optique.

Par exemple un élément intermédiaire, tel qu'une couche transparente, est disposé entre le système, le plan focal image et les photodétecteurs.

Dans ce mode de réalisation, la couche intermédiaire et l'optique sont configurés de sorte qu'il y ait une correspondance bijective entre chaque point du réseau et chaque point du plan focal image. Selon un mode de réalisation, on prévoit que cette couche intermédiaire n'opère aucune déviation des rayons lumineux.

D'autres types de couplage peuvent être prévus entre le plan focal image et le réseau de photodétecteurs. On peut par exemple prévoir que la couche intermédiaire opère une convergence ou au contraire une divergence des rayons lumineux.
- Selon un exemple de réalisation, chaque système optique de la pluralité de systèmes optiques présente un unique plan focal image.
- Selon un exemple, la pluralité de systèmes optiques est disposée de sorte à s'étendre autour de l'intégralité du canal. Ainsi les systèmes optiques s'étendent tout autour du canal. Cela permet ainsi d'augmenter le diagramme de diffraction auquel l'on a accès. Les précisions de l'analyse et de l'identification de la nature des particules en sont encore améliorées.
- Selon un exemple, la pluralité de systèmes optiques est disposée de manière continue autour de l'intégralité du canal. Cela permet de collecter le digramme de diffusion sur 180° voire 360°. L'invention permet ainsi de collecter des informations en plus grande quantité. La détection des particules et l'identification de leurs paramètres, tels que leurs tailles, leur indice de diffraction optique ou leur nature, est donc améliorée.
- Selon un exemple, les réseaux de photodétecteurs associés aux systèmes optiques forment une matrice de photodétecteurs. Cette matrice peut être rectangulaire ou non. Ainsi, selon cet exemple, il n'y a pas de discontinuité entre les différents réseaux associés aux différents systèmes optiques.
- Selon un exemple, chaque système optique présente au moins un plan focal image et un axe optique. Le détecteur est configuré de sorte que tous les rayons diffusés par les particules selon des directions parallèles avant de traverser le système optique parviennent sur un même point situé sur le plan focal image. Le détecteur est configuré de sorte que tous les rayons diffusés par les particules selon un même angle, par rapport à l'axe optique par exemple, avant d'atteindre et donc de traverser le système optique parviennent, sur un même cercle situé sur le plan focal image. Comme le détecteur est configuré de manière à ce que chaque point du plan focal image corresponde de manière bijective à un point du réseau de photodétecteurs, tous ces rayons diffusés selon des directions parallèles parviennent au réseau en formant un cercle ou un point.
- Selon un exemple, les photodétecteurs des réseaux de photodétecteurs sont disposés selon des courbes d'iso-valeurs des angles de diffusion.
- Selon un exemple, le nombre N de systèmes optiques est impair, avec de préférence N = 3, 5 ou 7.
- Selon un exemple, le détecteur est configuré de sorte que la figure de diffusion des particules présente un axe de symétrie qui coïncide avec une direction principale de propagation du rayonnement lumineux incident se propageant dans le canal. De préférence, les systèmes optiques de la pluralité de systèmes optiques sont répartis de manière non symétrique par rapport à ladite direction principale de propagation.

Une difficulté induite par un assemblage classique de plusieurs systèmes optiques est que les extrémités des lentilles de ces systèmes optiques présentent des aberrations. Par ailleurs, les zones à la frontière entre deux lentilles risquent de ne pas être correctement imagées.

En prévoyant un assemblage asymétrique de lentilles par rapport à la direction principale de propagation, on peut retrouver les angles non imagés qui sont au voisinage de la frontière de deux lentilles car l'information de diffusion est aussi portée par les angles symétriques (par rapport à la direction principale de propagation) qui eux ne se trouvent pas à la frontière de deux lentilles.

La figure 1 sera décrite en détail dans la section relative la description détaillée. Néanmoins, il apparaît immédiatement sur cette figure 1 que les zones Z1' et Z2, situées à la frontière entre deux lentilles adjacentes ne seront pas imagées ou seront mal imagées. En revanche, les informations portées par les rayons lumineux parvenant dans ces zones pourront être retrouvées dans les zones Z1 et Z2', symétriques des zones Z1' et Z2 par rapport à la direction principale de propagation. Or, grâce à l'assemblage asymétrique des systèmes optiques, ces zones Z1' et Z2 ne sont pas situées à la frontière entre deux systèmes optiques et seront parfaitement imagées.

Cela permet donc de reconstruire l'image angulaire de manière parfaitement précise.
- Selon un exemple, le détecteur comprend un circuit optique, le circuit optique comprenant la pluralité de systèmes optiques. Selon un exemple, le détecteur comprend un circuit optique formant un ensemble monobloc. Cela signifie par exemple que le circuit optique est formé d'un seul tenant. Il peut être manipulé dans son entièreté en étant saisi par l'une de ces parties. La manipulation de l'un des systèmes optiques du circuit optique entraîne la manipulation de la pluralité des systèmes optiques. Cet ensemble monobloc est distinct du circuit optronique.

Selon un exemple de réalisation, un circuit optique présente en outre un passage formant en partie au moins le canal.

Selon un autre exemple, le détecteur comprend un circuit optique ne formant pas un ensemble monobloc.

Selon un exemple, le détecteur comprend également un circuit optronique comprenant un substrat portant au moins l'un parmi le réseau de photodétecteurs et ladite source, le circuit optronique présentant une ouverture en regard du passage.

Le circuit optique forme un ensemble monobloc. De préférence, avant assemblage des circuits optique et optronique, le circuit optronique forme un ensemble monobloc distinct du circuit optique.
- Selon un exemple, le circuit optique et le circuit optronique sont superposés et de préférence en contact. Cet exemple particulier s'applique au cas où le circuit optique ne forme pas un ensemble monobloc et au cas où le circuit optique forme un ensemble monobloc. Cet exemple particulier permet de fournir un diagramme très complet de diffusion des particules. Il permet ainsi d'améliorer considérablement la précision de l'information recueillie sur les particules. Par ailleurs, ce mode de réalisation présente pour avantage de réduire considérablement l'encombrement du système. En particulier, la surface occupée par le circuit optronique est réduite. De même, la surface occupée par le circuit optique est réduite.

Le circuit optique s'étend entre deux plans parallèles P1, P2. Le circuit optronique s'étend entre deux plans parallèles P3, P4. P1, P2, P3 et P4 sont parallèles.

L'interface formée entre le circuit optique et le circuit optronique est un plan parallèle à P1, P2, P3 et P4. Si le circuit optique et le circuit optronique sont en contact cette interface correspond à P2 et P3.
- Selon un exemple, lequel les réseaux de photodétecteurs s'étendent, de préférence tous, dans un même plan et les systèmes optiques comprennent des optiques réflectives configurées pour réfléchir les rayons diffusés par les particules en direction dudit plan.
- Selon un exemple, le détecteur comprend en outre ladite au moins une source configurée pour émettre ledit au moins un rayonnement lumineux incident et un substrat. Au moins l'un parmi le réseau de photodétecteurs et la source est porté par le substrat.
- Selon un exemple, le détecteur comprend plusieurs systèmes optiques et les plans focaux des systèmes optiques sont coplanaires. Cela permet notamment de simplifier la réalisation du circuit portant les imageurs.
- Selon un exemple, le détecteur comprend en outre ladite au moins une source configurée pour émettre ledit au moins un rayonnement lumineux et un substrat, et l'au moins un réseau de photodétecteurs et la source sont portés par le substrat, de préférence par une face avant du substrat.
- Selon un exemple, le canal s'étend selon une direction d'extension principale. L'au moins un réseau de photodétecteurs s'étend principalement dans un plan (yz) perpendiculaire à ladite direction principale d'extension (x) du canal. Le détecteur comprend ladite source, ladite source émettant un rayonnement lumineux selon une direction principale d'émission parallèle à ladite direction principale d'extension (x) du canal et perpendiculaire audit plan (yz) dans lequel l'au moins un réseau de photodétecteurs s'étend principalement.
- Selon un exemple, ledit au moins un circuit optique comprend :
   - au moins une lentille définissant ledit plan focal image optiquement couplé au réseau de photodétecteurs,
   - au moins deux optiques réflectives, comprenant par exemple des surfaces réfléchissantes, configurées pour réfléchir les rayons émis par la source jusqu'à ladite au moins une lentille.

La présente invention trouve pour domaine préférentiel d'application la détection de particules de diverses tailles, de préférence dans le domaine des particules microscopiques, voire nanométriques. Par exemple la présente invention peut servir à la détection de particules issues de fumées, de poudre d'explosifs, de particules polluantes, de particules de poussière, de particules d'allergènes telles que les pollens, les spores de moisissure, ou encore de particules cancérigènes, ou des particules biologiques telles que des bactéries, des virus, ou encore des exosomes.

La présente invention s'applique à tout type de particules véhiculées par un fluide, que celui-ci soit liquide et/ou gazeux.

Le fluide présent ou s'écoulant dans le canal est par exemple de l'air. Tel est le cas pour les détecteurs intégrés dans les systèmes suivants : un système d'alarme anti-incendie, un système de détection d'incendie, un système de détection de poudre d'explosifs, un système d'analyse de la qualité d'un fluide tel que l'air, un système d'alarme anti-pollution.

Alternativement, le fluide peut être un liquide tel que de l'eau. Tel est le cas pour les détecteurs intégrés dans les systèmes de détection d'espèces microbiologiques.

Un exemple simplifié de détecteur selon l'invention va maintenant être décrit en référence aux figures 1 et 2, pour en comprendre le principe de fonctionnement.

Le détecteur comprend un canal 20 destiné à recevoir au moins un fluide comprenant des particules 60. Sur la figure 1, le canal 20 s'étend selon une direction parallèle à l'axe x du repère orthogonal xyz.

Le détecteur comprend également une entrée optique permettant à une source lumineuse 210 d'émettre des rayons lumineux dans le canal 20. Le faisceau lumineux, issu de la source 210, est de préférence collimaté lorsqu'il pénètre à l'intérieur du canal 20. À cet effet, on peut prévoir une optique classique. À l'intérieur du canal 20, le faisceau présente une direction principale de propagation 105 parallèle à l'axe y.

Les rayons lumineux de ce faisceau, lorsqu'ils parviennent sur une particule 60, sont déviés par rapport à cette direction principale de propagation 105.

Le détecteur comprend des systèmes optiques 15a-15e disposés de sorte à recueillir les rayons lumineux diffusés par les particules 60. Chaque système optique 15a-15e présente un plan focal image et fait converger, en un même point de ce plan focal image, tous les rayons lumineux diffusés par les particules selon des directions parallèles.

Par ailleurs, un réseau 230a-230e de photodétecteurs 231 est associé à chaque système optique 15a-15e. Chaque photodétecteur 231 peut comprendre ou peut être formé par une photodiode. Chaque réseau de photodétecteurs 231 peut ou non former une matrice de photodétecteurs. Alternativement, les photodétecteurs 231 du réseau peuvent être répartis selon des courbes d'iso-valeur des angles de diffraction comme cela sera expliqué en détail par la suite.

Les réseaux 230a-230e de photodétecteurs 231 et les systèmes optiques 15a-15e sont couplés de manière à ce que les rayons lumineux diffusés par les particules selon des directions parallèles parviennent tous en un même point d'un réseau 230a-230e de photodétecteurs 231. De cette manière, l'invention permet de réduire, voire de supprimer, le flou angulaire qui est habituellement induit lorsque des particules, positionnées aléatoirement, projettent des diagrammes de diffusion translatés selon leurs positions relatives et lorsque la distance qui sépare ces particules est du même ordre de grandeur que la distance séparant les photodétecteurs d'un réseau.

Au contraire, l'invention prévoit que tous les rayons parallèles tombent sur un seul et même point de l'imageur. Ainsi, l'image obtenue est une image angulaire de la diffusion d'un nuage de particules. Cette image est indépendante de la position individuelle de chaque particule. L'image obtenue est ainsi une transformée de Fourier spatiale du rayonnement du nuage de particules. Par conséquent, l'invention permet ainsi d'augmenter considérablement la sensibilité du détecteur et le contraste de l'information portée par le diagramme de rayonnement des particules.

La figure 2 est une vue partielle et agrandie de la zone en pointillés référencée « A » en figure 1. Sur cette figure 2, les rayons lumineux 12a et 12a' sont diffusés par les particules 60 et 60' selon des directions parallèles. Il en est de même pour les paires de rayons lumineux 12b, 12b' et 12c, 12c'.

Sur cette figure, le système optique comprend une lentille 150 convergente qui fait converger les rayons lumineux vers son plan focal image 151.

Selon un premier mode de réalisation illustré sur cette figure 2, le plan focal image 151 coïncide avec l'imageur formé par le réseau 230 de photodétecteurs 231. Ainsi, les rayons réfractés 13a, 13a' correspondants aux rayons diffusés parallèles 12a, 12a' parviennent en un même point du plan focal image 151, idéalement sur un même photodétecteur 231a du réseau 230. Il en est de même pour les rayons réfractés 13b, 13b' correspondants aux rayons diffusés parallèles 12b, 12b'.

Selon un mode de réalisation alternatif mais également illustré sur cette figure 2, le plan focal image 151 ne coïncide pas spatialement avec l'imageur formé par le réseau 230' de photodétecteurs 231a'-231d'. En effet, les photodétecteurs 231a'-231d' sont contenus dans un plan 234 qui est situé à distance du plan focal image 151 de la lentille 150. Dans ce cas, on prévoit un élément intermédiaire 300 configuré de sorte qu'à chaque point du plan focal image 151 corresponde, de manière bijective, un point du réseau 230'. Ainsi, dans ce mode de réalisation également, l'invention permet de réduire, voire de supprimer, le flou de positionnement.

Cet élément intermédiaire 300 peut être configuré pour ne pas dévier les rayons parvenant sur le plan focal image 151, comme illustré sur cette figure 2. Selon un autre mode de réalisation, l'élément intermédiaire 300 est une optique convergente, ce qui peut être avantageux pour réduire la taille occupée par le réseau de photodétecteurs par rapport à la taille du système optique. Par ailleurs, dans le cas de photodiodes à semiconducteurs cela permet aussi de réduire le bruit d'obscurité. En effet le courant d'obscurité est proportionnel à la surface de la photodiode.

Selon un autre mode de réalisation, l'élément intermédiaire 300 est une optique divergente, ce qui peut être avantageux pour agrandir le diagramme angulaire de diffusion au niveau du réseau et donc d'analyser avec encore plus de précision la diffusion des particules.

En réduisant ou en supprimant le flou de positionnement, l'invention permet de prévoir un canal 20 de large section, la section étant prise dans le plan yz. Cela permet d'avoir un débit de fluide élevé par convection naturelle. L'invention permet donc d'améliorer le temps de réponse du détecteur même en l'absence de pompe. Cet avantage est particulièrement important dans les systèmes d'alarme, par exemple dans les systèmes d'alarme anti incendie.

Cette figure 2 fait également clairement apparaître que le système optique permet de faire converger le faisceau traversant le canal 20 en une zone de taille limitée, voire en une zone ponctuelle du plan focal image 151 et donc du réseau 230, 230'. En effet les rayons qui traversent le canal 20 en étant parallèles 111a, 111b et qui ne sont pas diffusés parviennent sur une zone réduite voire en un même point du réseau 230. La zone d'aveuglement 118 est donc très limitée. Idéalement, elle est limitée à une zone correspondant à un photodétecteur 232e. Cette zone correspond au foyer image (également désignée foyer image principal). En dehors de cette zone, les photodétecteurs ne sont pas éblouis et peuvent donc fournir l'information nécessaire à la détection et à l'analyse des particules. Tel est par exemple le cas des photodétecteurs 231c, 231c' et 231d, 231d' qui sont au voisinage immédiat de la zone d'aveuglement 118. Ainsi, l'invention permet de détecter les angles de diffusion très faibles, ce qui permet d'enrichir encore le diagramme de diffusion et d'améliorer la précision de la détection et de l'analyse.

Comme illustré en figure 1, on prévoit avantageusement de disposer plusieurs systèmes optiques 15a-15e autour du canal 20. De préférence, un réseau 230 de photodétecteurs 231 est associé à chacun des systèmes optiques 15a-15e. De préférence, mais de manière non limitative, les systèmes optiques entourent entièrement le canal 20. De préférence, ils forment un pourtour continu autour du canal. Ainsi, le détecteur peut récupérer les rayons diffusés dans toutes les directions du plan yz. On peut ainsi obtenir le diagramme de diffusion complet des particules.

On notera que selon un mode de réalisation alternatif, les systèmes optiques n'entourent pas entièrement le canal 20 et/ou ne sont pas disposés de manière continue autour du canal 20.

De manière également avantageuse, les systèmes optiques 15a-15e sont disposés autour du canal de manière non symétrique par rapport à la direction principale de propagation 105 du rayonnement lumineux dans le canal 20.

Comme indiqué précédemment, les extrémités des lentilles induisent des aberrations et les zones angulaires Z1', Z2 à la frontière entre deux lentilles induisent des risques d'incorrection. En considérant que les particules 60 n'ont pas d'orientation préférentielle et sont considérées comme statistiquement sphériques, la figure de diffusion sur ces particules 60 présente un axe de symétrie qui coïncide avec la direction principale de propagation 105 du rayonnement lumineux dans le canal 20. En théorie, un diagramme de diffusion sur 180° est complet puisqu'il est symétrique par rapport à la direction principale de propagation 105. En prévoyant un assemblage asymétrique de systèmes optiques 15a-15e par rapport à cette direction principale de propagation 105, on peut retrouver les zones angulaires Z1', Z2 non ou mal imagées qui sont au voisinage de la frontière de deux lentilles car la formation de diffusion est également portée par les zones angulaires Z1 et Z2', respectivement, symétriques par rapport à cette direction 105, ces zones angulaires Z1 et Z2' symétriques ne se trouvant elles pas à la frontière entre deux lentilles.

Par exemple, afin de ne pas prendre en compte les zones angulaires Z1', Z2 non ou mal imagées, l'une des solutions suivantes, voire une combinaison de ces solutions peut être mises en oeuvre :
- ne pas prévoir de photodétecteurs pour collecter les rayons issus de ces zones. Dans ce cas, les rayons issus de ces zones parviennent au substrat 201 sans rencontrer de photodétecteurs.
- ne pas prévoir de connexion électrique pour les photodétecteurs qui sont positionnées de sorte à collecter les rayons issus de ces zones. Ce mode de réalisation a pour avantage de simplifier la disposition des photodétecteurs sur le circuit optronique, notamment lorsqu'ils forment des matrices, la non-prise en compte des certains des photodétecteurs étant alors effectuées lors de la connexion électriques.
- prévoir un cache entre le plan focal image et les photodétecteurs afin de bloquer ou absorber les rayons issus de ces zones. Le cache est configuré pour absorber une partie et de préférence tout le rayonnement lumineux qui lui est incident.
- prévoir une étape de traitement de signal afin de supprimer les informations issues des photodétecteurs ayant reçus les rayons issus de ces zones.

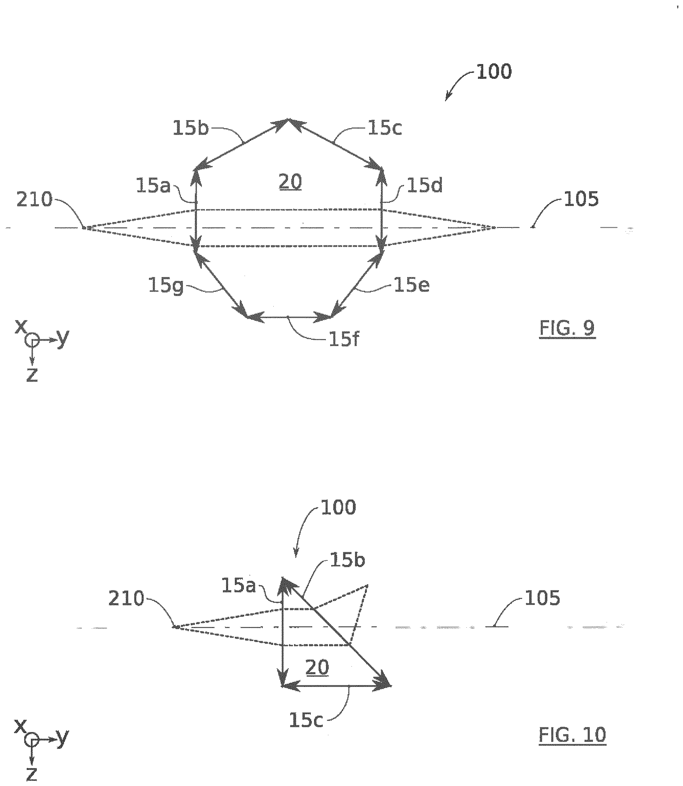

De préférence, on utilise un nombre impair de système optique. Sur l'exemple illustré en figure 1, on utilise cinq systèmes optiques. Sur les modes de réalisation illustrés en figures 9 et 10, le détecteur comprend respectivement sept et trois systèmes optiques pour entourer complètement le canal 20. Dans d'autres modes de réalisation, on pourra prévoir un nombre plus élevé de systèmes optiques. Comme indiqué ci-dessus, la configuration et la disposition relative de ces systèmes optiques sont asymétriques par rapport à l'axe principal de propagation 105 des rayons lumineux.

Ainsi, les illustrations schématiques des figures 1 et 2 permettent de comprendre clairement les avantages de l'invention en termes de réduction du flux de positionnement, de réduction de la zone d'aveuglement et d'augmentation de l'étendue du diagramme de rayonnement angulaire détecté. Tous ces effets tendent à améliorer la quantité et la précision des informations obtenues sur la diffusion des particules. Ils permettent également d'améliorer la sensibilité et le temps de réponse du détecteur.

L'invention permet ainsi d'améliorer significativement la détection et l'analyse de la nature des particules.

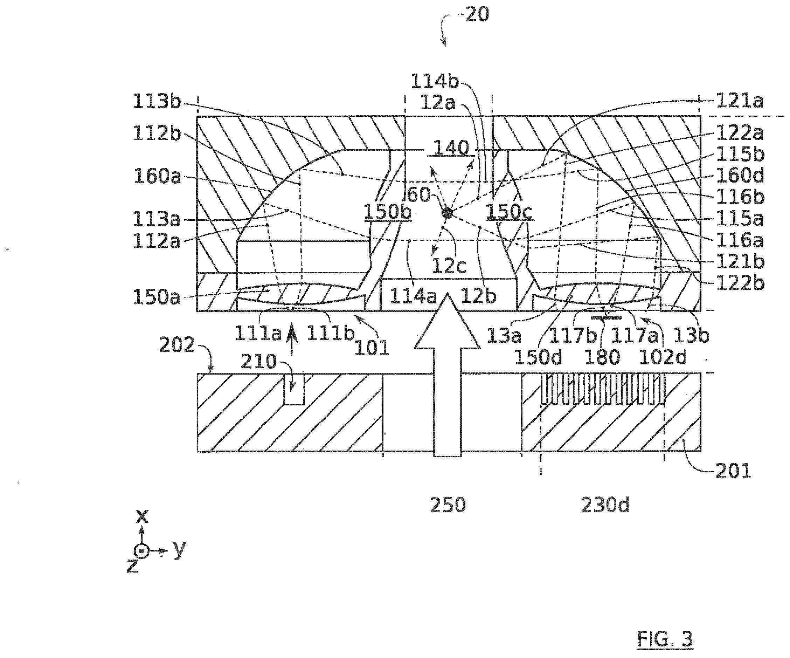

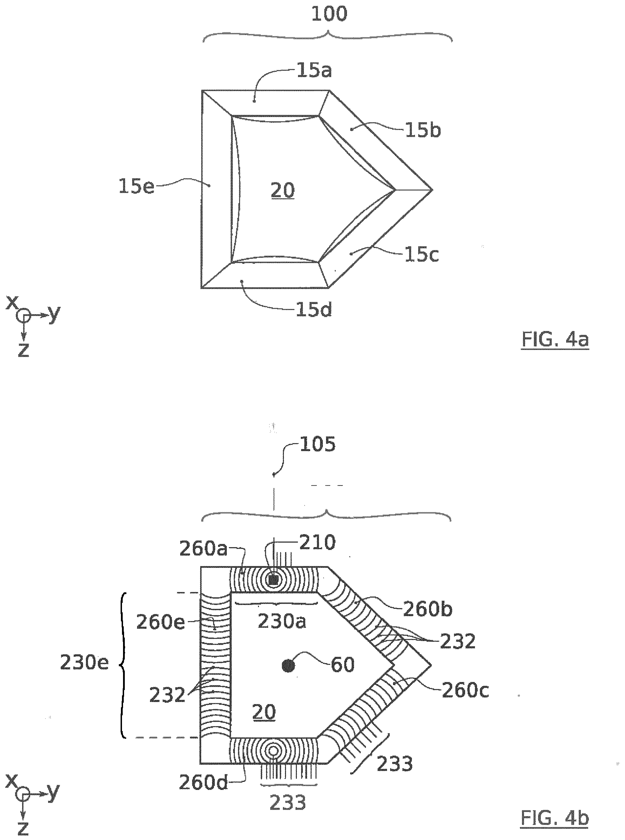

Un exemple particulier de détecteur selon l'invention va maintenant être décrit en référence aux figures 3 et 4. Cet exemple particulier permet de fournir un diagramme très complet de diffusion des particules. Il permet ainsi d'améliorer considérablement la précision de l'information recueillie sur les particules. Par ailleurs, ce mode de réalisation permet de réduire significativement l'encombrement du détecteur. En particulier, sa surface, prise perpendiculairement à la direction principale extension du canal et son épaisseur, prise parallèlement à l'extension principale du canal peuvent être très limitées.

Le détecteur comprend un circuit optique 100 et un circuit optronique 200 dont l'assemblage définit le canal 20.

Le circuit optique 100 comprend plusieurs systèmes optiques 15a-15e disposés autour du passage formant une partie du canal 20. Chaque système optique comprend plusieurs dioptres 150a-150d, sphériques, asphériques, ou encore de forme libre, segmentés entre l'air et un matériau diélectrique transparent. Ce matériau diélectrique transparent peut par exemple être une résine à base de polymères.

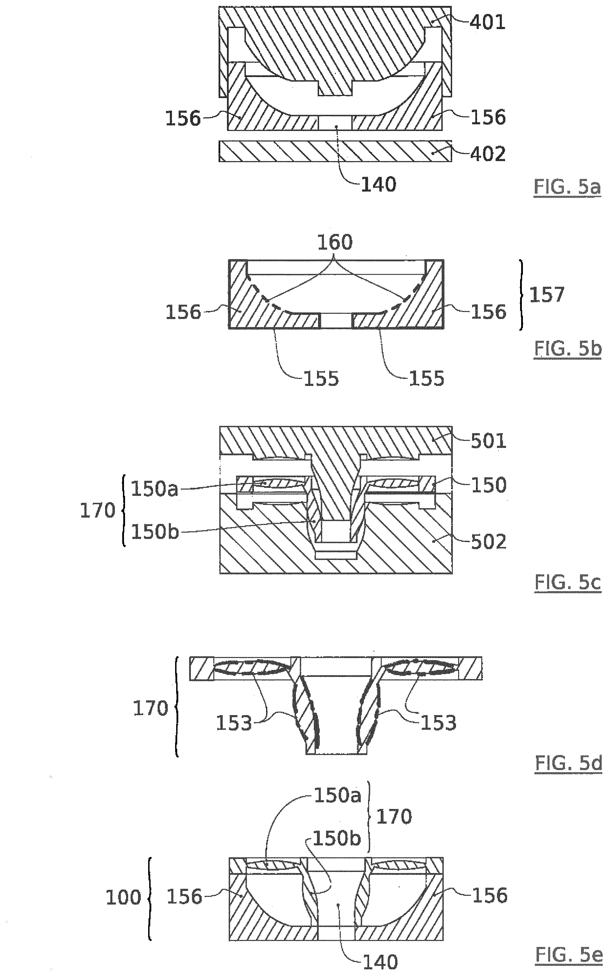

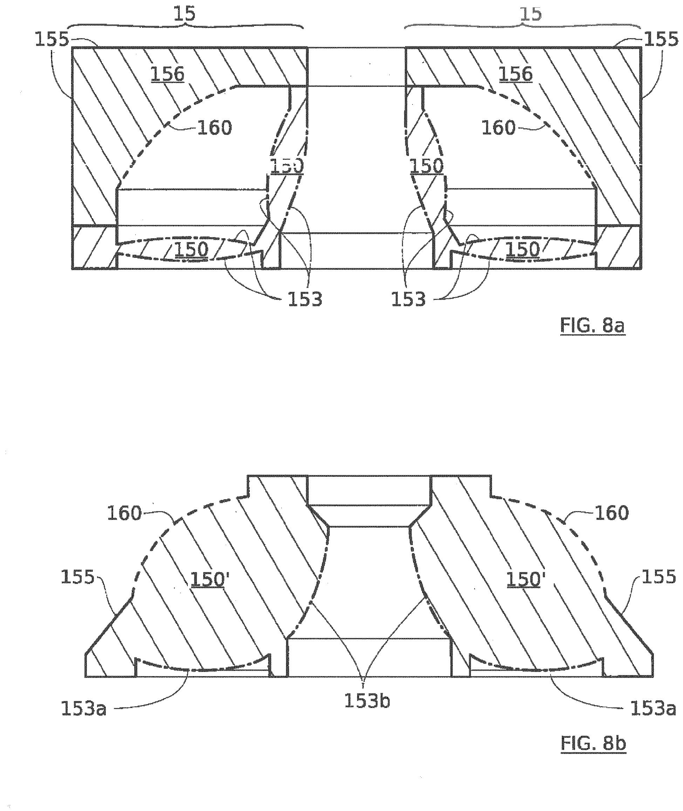

Chaque système optique comprend également des optiques réflectives. Ces optiques réflectives comprennent ou sont par exemple formées d'une ou plusieurs surfaces réfléchissantes 160a-160b. Sur les figures 5b, 8a et 8b, ces surfaces réfléchissantes 160 sont illustrées par des traits discontinus épais. Ces optiques réflectives sont par exemple formées à l'aide d'un dépôt métallique comme par exemple de l'or, de l'aluminium ou des miroirs diélectriques interférentiels.

Ces optiques ont pour rôle de projeter la transformée de Fourier spatiale du rayonnement issu des particules 60 présentes dans le canal 20 sur un plan focal image 151 (yz) perpendiculaire à la direction principale d'extension du canal (direction x). Ces optiques ont également pour rôle de collimater dans le canal 20 le faisceau émis par la source 210, puis de projeter ce faisceau sur une zone spatialement réduite au niveau du plan focal image afin de réduire l'aveuglement comme indiqué ci-dessus.

De préférence, les plans focaux des systèmes optiques 15a-15e du circuit optique 100 sont coplanaires (parallèle au plan yz sur l'exemple de la figure 3).

Le circuit optronique 200 est un circuit réalisé sur un substrat 201, de préférence semi-conducteur, par exemple du silicium monocristallin. Ce circuit optronique 200 porte un réseau 230 de photodétecteurs 231 associé à chaque système optique. Ainsi, sur la figure 3, le réseau 230d est associé au système optique 15d.

De préférence, les photodétecteurs 231 du réseau 230 suivent les courbes 232 des iso-valeurs des angles de diffusion, c'est-à-dire la projection par des lentilles de cônes coaxiaux centrés sur la direction 105. Ces courbes 232 des iso-valeurs des angles de diffusion forment ainsi des arcs ou des portions d'anneaux.

Alternativement, les photodétecteurs 231 de chaque réseau 230 forment une matrice de photodétecteurs 231. On peut également prévoir qu'une même matrice forme l'ensemble des réseaux 230.

Comme indiqué précédemment, chaque système optique 15 est optiquement couplé avec le réseau 230 de photodétecteurs 231 qui lui est associé de manière à ce qu'il y ait une correspondance optique bijective entre chaque point du plan focal image 151 de la sortie 102 du système optique 15 et chaque point de ce réseau 230.

On peut par exemple prévoir que le plan 234 contenant les photodétecteurs du réseau 230d soit confondu avec le plan focal image 151d du système optique 15d. Dans ce cas, le plan de contact entre le circuit optique 100 et le circuit optronique 200 coïncide avec le plan focal image 151 des systèmes optiques 15 et le plan 234 contenant les photodétecteurs du réseau 230d.

Alternativement, on peut prévoir un élément intermédiaire 300 qui impose une distance d'entre les plans focaux image 151 des systèmes optiques et les réseaux 230 de photodétecteurs 231. Cette distance d est référencée en figure 3.

De préférence, les réseaux de photodiodes sont alignés en face des systèmes optiques. Selon des modes de réalisation alternatifs, l'élément intermédiaire 300 permet d'assurer le couplage optique entre les systèmes optiques 15a à 15d et les réseaux 230 de photodétecteurs 231 pour assurer une correspondance bijective, sans pour autant que les systèmes optiques soient alignés avec les réseaux de photodétecteurs. Ce mode de réalisation n'est pas illustré sur les figures.

Comme illustré sur l'exemple de la figure 3, le circuit optronique 200 comprend également la source 210.

La source est par exemple une source lumineuse à émission de surface, par exemple une LED à émission de surface ou un VCSEL (acronyme de vertical-cavity surface-emitting laser, signifiant diode laser à cavité verticale émettant par la surface). Ce circuit contient optionnellement un système électronique de traitement. Ce circuit 200 contient de plus une ouverture traversante 250, qui, lorsqu'elle est associée avec le passage 140 du circuit optique 100 définit au moins en partie le canal 20.

De préférence, le substrat 201 présente une face avant 202, qui porte, ou tout au moins par laquelle sont accessibles, la source 210 et les réseaux 230 de photodétecteurs 231.

Comme illustré sur cet exemple, le circuit optique 100 s'étend entre deux plans parallèles P1, P2. Le circuit optronique 200 s'étend entre deux plans parallèles P3, P4. P1, P2, P3 et P4 sont parallèles lorsque le circuit optique 100 et le circuit optronique 200 sont superposés. Les plans P1, P2, P3 et P4 sont parallèles au plan YZ du repère xyz illustré en figure 3.

L'interface formée entre le circuit optique 100 et le circuit optronique 200 est un plan parallèle à P1, P2, P3 et P4. Si le circuit optique et le circuit optronique sont en contact cette interface correspond à P2 et P3.

La figure 4a illustre, en vue du dessus la disposition dans le plan yz, de cinq systèmes optiques 15a-15e qui entourent entièrement le canal 20.

La figure 4b illustre, en vue du dessus la disposition dans le plan yz, de cinq réseaux 230a-230e de photodétecteurs qui entourent entièrement le canal 20.

La source 210 est disposée de sorte à ce que le faisceau traversant le canal 20 définisse une direction principale de propagation 105. Les systèmes optiques 15a-15e et les réseaux 230a-230e sont disposés de manière non symétrique par rapport à cette direction 105. Comme cela a été expliqué plus haut, cela permet d'obtenir une image correcte du diagramme de diffusion de 0° à 180°.

Le système optronique 200 est ainsi formé de segments 260a-260e qui, de préférence entourent le canal 20 et de préférence forme un pourtour continu.
- Le segment référencé 260a porte la source 210. Il permet de collecter le rayonnement diffusé vers l'arrière (backscattering).
- Le segment référencé 260b permet de collecter le rayonnement diffusé vers l'arrière et le côté (back-side scattering).
- Le segment référencé 260c permet de collecter le rayonnement diffusé vers l'avant et le côté (forward-side scattering).
- Le segment référencé 260d permet de collecter le rayonnement diffusé vers l'avant (forward scattering).
- Le segment référencé 260e permet de collecter le rayonnement diffusé vers le côté (side scattering).

Ainsi, l'ensemble formé des systèmes optiques 15a-15e collecte tous les rayons diffusés par les particules 60. L'intégralité du diagramme de rayonnement peut ainsi être déterminée.

La figure 4b fait également apparaître les sorties électriques 233 des détecteurs. Si le système de traitement électronique est reporté, alors il y a autant de sorties électriques que de photodiodes. Si le système de traitement électronique est intégré, alors il n'y a que les sorties électriques du circuit après traitement.

En référence à la figure 3, un exemple de circuit optique 100 va maintenant être décrit en détail. Ce circuit optique 100 est notamment configuré pour :
- collimater, au moins dans le canal 20 le faisceau issu de la source 210, ce faisceau collimaté présentant une direction (y) parallèle au plan 234 (yz) dans lequel s'étendent les réseaux 230a-230d de photodétecteurs 231 et perpendiculaire à la direction principale (x) d'extension du canal 20,
- ramener sur le plan 234 (yz) les rayons diffusés par les particules 60, afin que ces rayons soient collectés par les photodétecteurs 231.

Pour cela, le circuit optique 100 présente une entrée 101 par laquelle pénètrent les rayons 111a, 111b émis par la source 210. Dans cet exemple, les rayons référencés 111a, 111b illustrent le contour du faisceau émis par la source. De préférence, cette entrée 101 est disposée au droit de la source 210. Une première lentille 150a formant deux dioptres est disposée au droit de l'entrée 101 de manière à être traversée par les rayons 111a, 111b. Les rayons réfractés 112a, 112b par cette lentille 150a sont réfléchis par une première surface réfléchissante 160a. Les rayons réfléchis 113a, 113b par cette surface réfléchissante 160a traversent une deuxième lentille 150b qui forme de préférence une partie de la paroi du canal 20. Cette lentille 150b permet de préférence de collimater le faisceau 114a, 114b traversant le canal 20. Certains des rayons de ce faisceau sont déviés par les particules 60. Ces rayons diffusés sont référencés 12a, 12b, 12c. Certains de ces rayons diffusés 12a, 12b traversent une lentille 150c d'un deuxième système optique 15d. Les rayons 121a, 121b diffusés ayant traversé la lentille 150c sont réfléchis par une surface réfléchissante 160d de ce deuxième système optique 15d. Cette surface réfléchissante 160d réfléchit 122a, 122b ces rayons diffusés en direction d'une lentille 150d de ce deuxième système optique 15d.

La lentille 150d est configurée pour orienter les rayons 122a, 122b sur le réseau 230d de photodétecteurs 231. Les rayons sortant de la lentille 150d sont référencés 117a, 117b en figure 3. Ils s'échappent du système optique par la sortie optique 102d.

Le système optique 150d est configuré de sorte que tous les rayons diffusés par les particules selon des directions parallèles dans le canal 20 parviennent sur le plan focal image 151d de ce système optique 150d en un même point et parviennent en un même point du réseau 230d de photodiodes 231. En revanche, comme précédemment, les rayons diffusés par les particules selon des directions non parallèles dans le canal 20 parviennent sur le plan focal image 151d de ce système optique 150d en des points distincts et parviennent alors aussi sur des points distincts du réseau 230d de photodiodes 231.

Selon le même principe, tous les rayons parallèles formant le faisceau collimaté traversant le canal 20 (le faisceau étant délimité schématiquement par les deux rayons 114a, 114b), et qui ne sont pas diffusés par les particules 60, parviennent en un même point du plan focal image 151d et donc en même point de l'imageur. Ils n'éblouissent donc qu'une zone réduite de l'imageur, idéalement un unique photodétecteur. Le trajet des rayons du faisceau collimaté qui ne sont pas diffusés par les particules 60 est illustré par les références 115a, 115b, 116a, 116b, 117a, 117b.

Ainsi, les systèmes optiques 15a, 15d sont convergents de sorte à faire converger les rayons lumineux non diffusés 111a, 111b par les particules 60 et les rayons lumineux diffusés 12a-13a, 12b-13b par les particules 60, vers au moins un foyer image situé sur le plan focal image 151d du système optique 15d. Plus précisément, le système optique 15d est convergeant,
∘ de sorte à ce que les rayons lumineux issus de la source 210 et qui n'ont pas été déviés par les particules 60 convergent vers un foyer image, qui peut être désigné foyer image principal, et situé sur le plan focal image 151d;
∘ et de sorte à ce que les rayons diffusés 12a-13a, 12b-13b par les particules 60 convergent eux vers d'autres foyers image, désignés foyers image secondaires, qui sont aussi situés sur le plan focal image 151d.

Sur l'exemple illustré en figure 3, chacune des lentilles 150a-150d est constituée de un ou plusieurs dioptres sphériques ou asphériques. Selon d'autres exemples non illustrés, chaque lentille peut être constituée de dioptres segmentés.

Selon un mode de réalisation avantageux mais non limitatif, comme cela est illustré en figure 8a, les éléments optiques 150 peuvent être recouverts entièrement ou partiellement d'une couche anti-réflexion 153. Les surfaces réfléchissantes 160 sont par exemple obtenues par métallisation. Certaines ou toutes les autres surfaces du système optique 15 peuvent être recouvertes d'une surface absorbante 155 formée par exemple d'un film sombre, par exemple de peinture noire. Sur les figures 5b, 8a et 8b, ces surfaces absorbantes 155 sont illustrées par des traits continus épais.

Sur ces exemples, les systèmes optiques 15 comprennent chacun deux éléments optiques. Chaque élément optique comprend deux dioptres. De préférence, chaque élément optique est une lentille 150 sphérique ou asphérique sur cet exemple. Le système optique 15 comprend un support 156. Le support 156 porte les optiques réflectives telles que la surface réfléchissante 160. Le support 156 porte également les deux lentilles 150, 150. Ces deux lentilles 150, 150 sont de préférence rapportées sur le support 156. La réalisation de ce type de système optique sera décrite en détail en référence aux figures 5 à 7. L'ensemble de ce système optique présente cinq dioptres. Au sein de ce système optique, les rayons lumineux se propagent au travers des lentilles et dans l'air.

Selon un autre exemple de réalisation, illustré en figure 8b, le système optique 15' comprend une seule pièce optique 150'. Cette pièce optique 150' présente trois dioptres. Un premier dioptre 153a est configuré pour orienter les rayons incidents sur un deuxième dioptre formant une optique réfléchissante (surface réfléchissante 160). Ce deuxième dioptre 160 est configuré pour réfléchir les rayons en direction d'un troisième dioptre 153b.

Les premier 153a et troisième dioptre 153b sont par exemple recouverts d'un revêtement anti réflexion. Sur les figures 5d, 8a et 8b, ces revêtements anti réflexion sont illustrés par une alternance de traits épais court et épais long. Les autres surfaces sont de préférence recouvertes d'une surface absorbante 155 formée par exemple d'un film sombre.

Dans ce mode de réalisation, la pièce optique 150' est monolithique. Elle est de préférence formée d'un seul tenant. Elle ne présente pas d'ouverture. Au sein de ce système optique, les rayons lumineux ne se propagent pas dans l'air mais uniquement dans la matière, par exemple une résine à base de polymères. Cela permet d'améliorer la robustesse du système optique. Par ailleurs, cela permet de réduire les erreurs de fabrication et d'alignement des différents éléments optiques formant un même système optique. Ce mode de réalisation permet ainsi de simplifier le procédé, dans réduire le coût tout en améliorant la précision des mesures.

Les figures 5 à 7 illustrent un exemple de procédé de réalisation du détecteur selon la figure 3.

Les figures 5a à 5e illustrent la réalisation du circuit optique 100.

Le circuit optique 100 peut être réalisé en deux parties 157, 170 par gaufrage ou par moulage par injection d'un matériau diélectrique transparent, par exemple une résine à base de polymères.

Une première pièce 157 définit les supports 156 pour les lentilles 150. Cette première pièce 157 fait également office de support pour les surfaces réfléchissantes 160.

Cette première pièce 157 est par exemple obtenue par moulage à partir d'un moule formé des parties 401 et 402 illustrées en figure 5a.

Une deuxième pièce 170 porte l'assemblage des lentilles 150. Cette pièce 170 est par exemple obtenue par moulage à partir d'un moule formé des pièces 501 et 502 illustrées en figure 5c.

Une fois chacune des pièces 157,170 moulée, leurs matériaux est durci, par exemple avec une étape de recuit thermique, puis il est démoulé. On obtient alors les pièces 157, 170 dont les formes sont illustrées en figures 5b et 5d.

Si nécessaire, les lentilles 150 destinées à former une partie du canal sont inclinées afin de présenter un angle de dépouille permettant de faciliter l'étape de démoulage. Cette inclinaison peut être compensée par les autres éléments optiques du circuit optique 100.

De préférence, chacune des pièces moulées est de la taille d'un wafer, c'est-à-dire une tranche de matériau semi-conducteur obtenu par les procédés classiques de microélectronique, typiquement un disque de 200 ou 300 mm.

Une fois les pièces durcies, on procède ensuite à un polissage des surfaces. Il est nécessaire d'avoir des surfaces de qualité optique, c'est-à-dire avec une faible rugosité. Afin de former les surfaces réfléchissantes 160, certaines parois des supports 156 sont métallisées (avec par exemple de l'or ou de l'aluminium). Il est aussi possible de déposer des couches antireflets 153 sur les dioptres des lentilles 150 et de déposer une couche anti réflexion 155, par exemple de la peinture absorbante noire, sur les surfaces autres que les miroirs et les dioptres des lentilles.

Ces différentes couches sont illustrées sur les figures 5b et 5d.

Les deux pièces 157 et 170 sont ensuite assemblées. Sur l'exemple illustré, cet assemblage s'effectue wafer contre wafer, par exemple avec de la colle ou bien avec un traitement de surface plasma. Cette étape est schématisée en figure 5e.

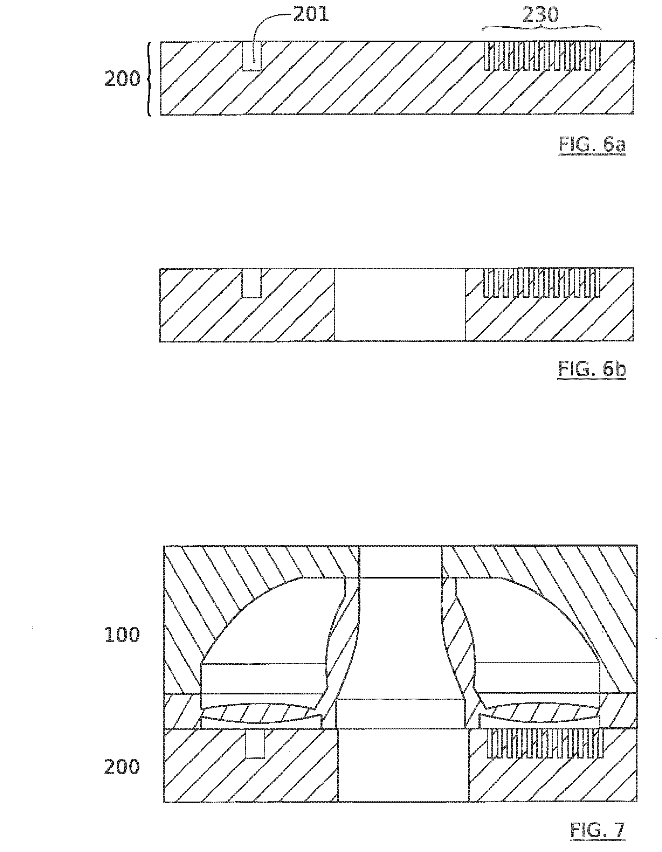

Les figures 6a et 6b illustrent un exemple de procédé de réalisation du circuit optronique 200 de la figure 3.

A partir d'un substrat 201 semi-conducteur, par exemple du silicium monocristallin, on réalise les photodétecteurs, par exemple des photodiodes. De préférence, on réalise également à partir de ce substrat 201 la source lumineuse 210. Cette source lumineuse 210 est de préférence une source à émission de surface.

De préférence, les photodétecteurs, la source 210, voire également, l'électronique de traitement, sont réalisés selon les techniques classiques de micro-électronique et d'optoélectronique. Cette étape est schématisée en 6a.

On effectue ensuite une gravure profonde à travers tout le substrat 201 pour structurer l'ouverture 250 qui définira en partie le canal 20 fluidique. Cette ouverture 250 est traversante. Cette étape est schématisée en figure 6b.

Enfin, comme illustré en figure 7, on hybride le circuit optique 100 avec le circuit optronique 200 en alignant les optiques en face des photodiodes. L'assemblage, de préférence wafer à wafer peut être réalisé avec de la colle optique ou bien avec un traitement de surface à plasma.

Au vu de la description qui précède, il apparaît clairement que l'invention propose une solution efficace pour améliorer la sensibilité et la précision du détecteur ainsi que son temps de réponse.

L'invention n'est pas limitée aux modes de réalisation décrits mais s'étend à tout mode de réalisation entrant dans la portée de la revendication 1.

En particulier, on peut prévoir l'une quelconque des variantes proposées ci-dessous qui peuvent être mise en oeuvre en combinaison avec n'importe lequel des modes de réalisation décrits précédemment.

Une première variante consiste à ce qu'au lieu de réaliser les systèmes optiques avec un même matériau, on peut prévoir d'utiliser un deuxième matériau, de préférence diélectrique, pour réaliser des optiques réfractives achromatiques. Cela permet par exemple de relocaliser en un même point des rayons lumineux présentant des longueurs d'ondes différentes.

On peut également prévoir que le circuit optique 100 reçoive des faisceaux lumineux de longueur d'onde différente. Par exemple, on peut prévoir que le système optique 100 soit optiquement couplé avec plusieurs sources optiques, ces sources optiques émettant des longueurs d'ondes différentes. Cela permet notamment d'analyser plus précisément leur nature.

Une autre variante avantageuse consiste à implémenter un contrôle de la polarisation, au niveau de la source ou par l'intermédiaire d'une optique polarisante. Cela permet d'obtenir deux diagrammes de diffusion ce qui permet au final d'améliorer l'analyse.

Une autre variante consiste à recycler la lumière à l'aide de cavité à miroirs pour permettre à la lumière de la source d'effectuer plusieurs passages à travers le canal et ainsi améliorer la sensibilité du capteur. Ces miroirs sont de préférence placés entre la source et l'image de la source par le système optique. Ainsi, ces miroirs seraient disposés au-dessus de la zone d'éblouissement. Naturellement, ces miroirs ne seraient pas disposés au-dessus de photodétecteurs qui ne sont pas situés dans la zone d'éblouissement. Un exemple de positionnement de ce miroir est illustré en figure 3 par la référence 180.

### REFERENCES

- 100.: Circuit optique
- 101.: Entrée optique
- 102.: Sortie optique
- 105.: Direction principale de propagation du rayonnement lumineux dans le canal
- 111.: Rayons émis par la source
- 112, 113, 114.: Rayons réfractés et/ou réfléchis
- 118.: Zone d'aveuglement
- 12.: Rayons lumineux diffusés par la particule
- 121, 122: Rayons réfractés par une lentille après diffusion par une particule
- 13.: Rayons lumineux en sortie de système optique
- 140.: Passage

- 15.: Système optique
- 150.: Lentille
- 151.: Plan focal image
- 152.: Axe optique
- 153.: Surface anti-réflective
- 155.: Surface absorbante
- 156.: Support
- 157.: Pièce de support
- 160.: Surface réfléchissante
- 170.: Pièce optique
- 180.: Miroir

- 20.: Canal
- 60.: Particule(s)

- 200.: Circuit optronique
- 201.: Substrat
- 202.: Face avant
- 210.: Source
- 211.: Direction principale d'émission
- 230.: Réseau de photodétecteurs
- 231.: Photodétecteurs
- 232.: Courbes d'iso-valeurs
- 233.: Sorties électriques des photodétecteurs
- 234.: Plan contenant les photodétecteurs
- 250.: Ouverture
- 260.: Segments

- 300.: Elément intermédiaire
- 401, 402.: Pièce de moule
- 501, 502.: Pièce de moule

## Revendications

1. Détecteur de particules (60) comprenant au moins :
∘ un canal (20) destiné à recevoir au moins un fluide comprenant des particules (60) et configuré pour recevoir au moins un rayonnement lumineux (111a, 111b, 114a, 114b) émis par une source (210) lumineuse;
∘ au moins un réseau (230) de photodétecteurs (231) configuré de sorte qu'au moins certains des photodétecteurs (231) reçoivent des rayons lumineux émis par la source et diffusés par les particules (60) présentes dans le canal (20);
dans lequel:
∘ le détecteur comprend en outre au moins un système optique (15) configuré pour être traversé par une partie au moins des rayons lumineux après leur diffusion par les particules (60) et avant leur réception par les photodétecteurs (231),
∘ chaque système optique (15) est associé à un réseau (230) de photodétecteurs (231) et présente un plan focal image (151),
∘ le détecteur est configuré pour que ledit plan focal image (151) du système optique (15) soit optiquement couplé au réseau (230) de photodétecteurs (231) de sorte que tous les rayons diffusés par les particules (60) selon des directions parallèles avant de traverser le système optique (15) parviennent, après traversée du système optique (15), en un même point du réseau (230) de photodétecteurs (231) associé à ce système optique (15),
∘ l'au moins un système optique (15) est convergent de sorte à faire converger les rayons lumineux issus de la source et non diffusés par les particules vers un foyer image situé sur le plan focal image (151) du système optique (15),
∘ ledit plan focal image (151) du système optique (15) soit optiquement couplé au réseau (230) de photodétecteurs (231) de sorte que tous les rayons diffusés par les particules (60) selon des directions non parallèles avant de traverser le système optique (15) parviennent, après traversée du système optique (15), en des points distincts du réseau (230) de photodétecteurs (231) associé à ce système optique (15) **caractérisé en ce que** le détecteur comprend une pluralité de systèmes optiques (15b, 15c, ...), chaque système optique (15b, 15c, ...) étant associé à un réseau (230) de photodétecteurs (231), la pluralité de systèmes optiques (15b, 15c, ...) étant disposée de sorte à s'étendre autour d'une partie au moins du canal (20).

2. Détecteur selon la revendication précédente dans lequel le plan focal image (151) du système optique (15) est soit confondu avec les photodétecteurs (231) du réseau (230) de photodétecteurs (231) associé à ce système optique (15), soit est situé à distance des photodétecteurs (231) du réseau (230) de photodétecteurs (231) associé à ce système optique (15).

3. Détecteur selon l'une quelconque des revendications précédentes configuré pour que ledit plan focal image (151) du système optique (15) soit optiquement couplé au réseau (230) de photodétecteurs (231) de sorte que tous les rayons diffusés par une particule (60) selon des directions non parallèles et selon un même angle de diffusion, par rapport à un axe optique du système, avant de traverser le système optique (15) parviennent, après traversée du système optique (15), en des points distincts du réseau (230) de photodétecteurs (231) associé à ce système optique (15), ces points étant situés sur un même cercle.

4. Détecteur selon l'une quelconque des revendications précédentes dans lequel la pluralité de systèmes optiques est disposée de sorte à s'étendre autour de l'intégralité du canal (20) et de préférence disposée de manière continue autour de l'intégralité du canal (20).

5. Détecteur selon l'une quelconque des revendications précédentes dans lequel les photodétecteurs (231) des réseaux (230) de photodétecteurs (231) sont disposés selon des courbes d'iso-valeurs (232) des angles de diffusion.

6. Détecteur selon l'une quelconque des trois revendications précédentes dans lequel le nombre N de systèmes optiques est impair, avec de préférence N = 3, 5 ou 7.

7. Détecteur selon l'une quelconque des revendications précédentes configuré de sorte qu'une figure de diffusion des particules (60) présente un axe de symétrie qui coïncide avec une direction principale de propagation (105) du rayonnement lumineux incident (111a, 111b , 114a, 114b) se propageant dans le canal (20), et
dans lequel les systèmes optiques (15) de la pluralité de systèmes optiques sont répartis de manière non symétrique par rapport à ladite direction principale de propagation (105).

8. Détecteur selon l'une quelconque des revendications précédentes comprenant un circuit optique (100) formant un ensemble monobloc, le circuit optique (100) comprenant la pluralité de systèmes optiques (15) et présentant en outre un passage (140) formant en partie au moins le canal (20),
le détecteur comprenant également un circuit optronique (200) comprenant un substrat (201) portant au moins l'un parmi le réseau (230) de photodétecteurs (231) et ladite source (210), le circuit optronique (200) présentant une ouverture (250) en regard du passage (140), le circuit optique (100) et le circuit optronique (200) étant superposés et de préférence en contact.

9. Détecteur selon l'une quelconque des revendications précédentes dans lequel les réseaux (230) de photodétecteurs (231) s'étendent, de préférence tous, dans un même plan (231) et dans lequel les systèmes optiques (15) comprennent des optiques réflectives configurées pour réfléchir les rayons diffusés par les particules (60) en direction dudit plan (234).

10. Détecteur selon l'une quelconque des revendications précédentes comprenant en outre ladite au moins une source (210) configurée pour émettre ledit au moins un rayonnement lumineux et un substrat (201), et dans lequel l'au moins un réseau (230) de photodétecteurs (231) et la source (210) sont portés par le substrat (201), de préférence par une face avant (202) du substrat (201).

11. Détecteur selon l'une quelconque des revendications précédentes dans lequel le canal (20) s'étend selon une direction principale d'extension (x),
dans lequel l'au moins un réseau (230) de photodétecteurs (231) s'étend principalement dans un plan (234) (yz) perpendiculaire à ladite direction principale d'extension (x) du canal (20), et
le détecteur comprenant ladite source (210), ladite source (210) émettant un rayonnement lumineux selon une direction principale d'émission (211) parallèle à ladite direction principale d'extension (x) du canal (20) et perpendiculaire audit plan (234) (yz) dans lequel l'au moins un réseau (230) de photodétecteurs (231) s'étend principalement.

12. Système comprenant un détecteur selon l'une quelconque des revendications précédentes dans lequel le système est pris parmi :
- un système d'alarme anti-incendie,
- un système de détection d'incendie,
- un système d'analyse de la qualité d'un fluide tel que l'air ou l'eau,
- un système d'alarme anti-pollution,
- un système de détection de poudre d'explosifs,
- un système de détection d'espèces microbiologiques.

13. Procédé de fabrication d'un détecteur de particules (60) selon l'une quelconque des revendications 1 à 11, le procédé comprenant au moins les étapes suivantes :
∘ Fournir au moins un circuit optique (100) comprenant au moins un système optique (15), de préférence une pluralité de systèmes optiques,
∘ Fournir au moins un circuit optronique (200) comprenant au moins un substrat (201) portant au moins un réseau (230) de photodétecteurs (231) et de préférence une pluralité de réseaux (230) de photodétecteurs (231)
∘ Superposer le circuit optique (100) et le circuit optronique (200) de manière à ce que ledit plan focal image (151) du système optique (15) soit optiquement couplé au réseau (230) de photodétecteurs (231) de sorte que tous les rayons diffusés par les particules selon des directions parallèles avant de traverser le système optique (15) parviennent, après traversée du système optique (15), en un même point du réseau (230) de photodétecteurs (231) associé à ce système optique (15).

## Patentansprüche

1. Teilchendetektor (60), der mindestens Folgendes umfasst:
∘ einen Kanal (20), der dazu bestimmt ist, mindestens ein Fluid aufzunehmen, das Teilchen (60) umfasst, und dazu konfiguriert ist, mindestens eine Lichtstrahlung (111a, 111b, 114a, 114b), die von einer Lichtquelle (210) emittiert wird, zu empfangen;
∘ mindestens ein Netz (230) aus Fotodetektoren (231), das derart konfiguriert ist, dass mindestens bestimmte der Fotodetektoren (231) Lichtstrahlen von der Quelle empfangen und die von den Teilchen (60), die in dem Kanal (20) vorhanden sind, gestreut werden;
wobei:
∘ der Detektor außerdem mindestens ein optisches System (15) umfasst, das dazu konfiguriert ist, von mindestens einem Teil der Lichtstrahlen nach ihrer Streuung durch die Teilchen (60) und vor ihrem Empfang durch die Fotodetektoren (231) durchquert zu werden,
∘ jedes optische System (15) einem Netz (230) von Fotodetektoren (231) zugeordnet ist und eine Bildbrennebene (151) aufweist,
∘ der Detektor dazu konfiguriert ist, dass die Bildbrennebene (151) des optischen Systems (15) optisch mit dem Netz (230) von Fotodetektoren (231) derart gekoppelt ist, dass alle der Teilchen (60), die entlang der parallelen Richtungen gestreut werden, bevor sie das optische System (15) durchqueren, nach der Durchquerung des optischen Systems (15) an demselben Punkt des Netzes (230) von Fotodetektoren (231), das diesem optischen System (15) zugeordnet ist, ankommen,
∘ das mindestens eine optische System (15) derart konvergierend ist, dass es Lichtstrahlen, die aus der Quelle stammen und nicht von den Teilchen zu einem Bildfokus, die sich auf der Bildbrennebene (151) des optischen Systems (15) befinden, gestreut werden, konvergieren lässt,
∘ wobei die Bildbrennebene (151) des optischen Systems (15) optisch mit dem Netz (230) von Fotodetektoren (231) derart gekoppelt ist, dass alle Strahlen, die von den Teilchen (60) entlang der nicht parallelen Richtungen, bevor sie das optische System (15) durchqueren, nach dem Durchqueren des optischen Systems (15) an getrennten Punkten des Netzes (230) von Fotodetektoren (231), die diesem optischen System (15) zugeordnet sind, ankommen, **dadurch gekennzeichnet, dass** der Detektor eine Vielzahl optischer Systeme (15b, 15c, ...) umfasst, wobei jedes optische System (15b, 15c, ...) einem Netz (230) von Fotodetektoren (231) zugeordnet ist, wobei die Vielzahl optischer Systeme (15b, 15c, ...) derart angeordnet ist, dass sie sich um mindestens einen Teil des Kanals (20) erstrecken.

2. Detektor nach dem vorstehenden Anspruch, wobei die Bildbrennebene (151) des optischen Systems (15) entweder mit den Fotodetektoren (231) des Netzes (230) von Fotodetektoren (231), das diesem optischen System (15) zugeordnet ist, zusammenfällt, oder von den Fotodetektoren (231) des Netzes (230) von Fotodetektoren (231), das diesem optischen System (15) zugeordnet ist, beabstandet ist.

3. Detektor nach einem der vorstehenden Ansprüche, der dazu konfiguriert ist, dass die Bildbrennebene (151) des optischen Systems (15) optisch mit dem Netz (230) von Fotodetektoren (231) derart gekoppelt ist, dass alle Strahlen, die von einem Teilchen (60) entlang nicht paralleler Richtungen und gemäß demselben Streuungswinkel in Bezug auf eine optische Achse des Systems gestreut werden, bevor sie das optische System (15) durchqueren, nach dem Durchqueren des optischen Systems (15) an getrennten Punkten des Netzes (230) von Fotodetektoren (231), das diesem optischen System (15) zugeordnet ist, ankommen, wobei sich diese Punkte auf demselben Kreis befinden.

4. Detektor nach einem der vorstehenden Ansprüche, wobei die Vielzahl optischer Systeme derart angeordnet ist, dass sie sich um den gesamten Kanal (20) erstreckt und bevorzugt kontinuierlich um den gesamten Kanal (20) angeordnet ist.

5. Detektor nach einem der vorstehenden Ansprüche, wobei die Fotodetektoren (231) der Netze (230) von Fotodetektoren (231) entlang der Isowertkurven (232) der Streuwinkel angeordnet sind.

6. Detektor nach einem der drei vorstehenden Ansprüche, wobei die Anzahl N optischer Systeme ungerade ist, wobei bevorzugt N = 3, 5 oder 7.

7. Detektor nach einem der vorstehenden Ansprüche, der dazu konfiguriert ist, dass eine Streuungsfigur der Teilchen (60) eine Symmetrieachse aufweist, die mit einer Hauptausbreitungsrichtung (105) der einfallenden Lichtstrahlung (111a, 111b, 114a, 114b), die sich in dem Kanal (20) ausbreitet, zusammenfällt, und
wobei die optischen Systeme (15) der Vielzahl optischer Systeme nicht symmetrisch in Bezug auf die Hauptausbreitungsrichtung (105) verteilt sind.

8. Detektor nach einem der vorstehenden Ansprüche, der eine optische Schaltung (100) bildet, die eine einstückige Einheit bildet, wobei die optische Schaltung (100) die Vielzahl optischer Systeme (15) umfasst und außerdem eine Passage (140) aufweist, die zum Teil mindestens den Kanal (20) bildet, wobei der Detektor auch eine optronische Schaltung (200) umfasst, die ein Substrat (201) umfasst, das mindestens einen aus dem Netz (230) von Fotodetektoren (231) und die Quelle (210) trägt, wobei die optronische Schaltung (200) eine Öffnung (250) gegenüber der Passage (140) aufweist, wobei die optische Schaltung (100) und die optronische Schaltung (200) einander überlagert und bevorzugt in Kontakt sind.

9. Detektor nach einem der vorstehenden Ansprüche, wobei sich die Netze (230) von Fotodetektoren (231) bevorzugt alle in derselben Ebene (231) erstrecken, und wobei die optischen Systeme (15) reflektierende Optiken umfassen, die dazu konfiguriert sind, die Strahlen, die von den Teilchen (60) gestreut werden, in Richtung der Ebene (234) zu reflektieren.

10. Detektor nach einem der vorstehenden Ansprüche, der außerdem die mindestens eine Quelle (210), die dazu konfiguriert ist, mindestens eine Lichtstrahlung abzugeben, und ein Substrat (201) umfasst, und wobei das mindestens eine Netz (230) von Fotodetektoren (231) und die Quelle (210) von dem Substrat (201) bevorzugt über eine Vorderseite (202) des Substrats (201) getragen werden.

11. Detektor nach einem der vorstehenden Ansprüche, wobei sich der Kanal (20) in einer Haupterstreckungsrichtung (x) erstreckt,
wobei sich das mindestens eine Netz (230) von Fotodetektoren (231) hauptsächlich in einer Ebene (234) (yz) senkrecht zu der Haupterstreckungsrichtung (x) des Kanals (20) erstreckt, und
der Detektor die Quelle (210) umfasst, wobei die Quelle (210) eine Lichtstrahlung entlang einer Hauptemissionsrichtung (211) parallel zu der Haupterstreckungsrichtung (x) des Kanals (20) und senkrecht zu der Ebene (234) (yz), in der sich das mindestens einen Netz (230) von Fotodetektoren (231) hauptsächlich erstreckt, emittiert.

12. System, das einen Detektor nach einem der vorstehenden Ansprüche umfasst, und wobei das System genommen wird aus:
- einem Brandschutzalarmsystem,
- einem Brandmeldesystem,
- einem Analysesystem der Qualität eines Fluids, wie Luft oder Wasser,
- einem Verschmutzungsalarmsystem,
- einem Erfassungssystem für explosives Pulver,
- einem System zum Nachweis mikrobiologischer Spezies.

13. Verfahren zur Fertigung eines Teilchendetektors (60) nach einem der Ansprüche 1 bis 11, wobei das Verfahren mindestens die folgenden Schritte umfasst:
∘ Bereitstellen mindestens einer optischen Schaltung (100), die mindestens ein optisches System (15), bevorzugt eine Vielzahl optischer Systeme, umfasst,
∘ Bereitstellen mindestens einer optronischen Schaltung (200), die mindestens ein Substrat (201) umfasst, das mindestens ein Netz (230) von Fotodetektoren (231) und bevorzugt eine Vielzahl von Netzen (230) von Fotodetektoren (231) trägt,
∘ Überlagern der optischen Schaltung (100) und der optronischen Schaltung (200) derart, dass die Bildbrennebene (151) des optischen Systems (15) optisch an das Netz (230) von Fotodetektoren (231) derart gekoppelt ist, dass alle Strahlen, die von den Teilchen entlang der Richtungen, die vor dem Durchqueren des optischen Systems (15) parallel sind, nach dem Durchqueren des optischen Systems (15) an demselben Punkt des Netzes (230) von Fotodetektoren (231), das diesem optischen System (15) zugeordnet ist, ankommen.

## Claims

1. Particle detector (60) comprising at least:
- one channel (20) intended to receive at least one fluid comprising particles (60) and configured to receive at least one light radiation (111a, 111b, 114a, 114b) emitted by a light source (210);
- at least one photodetector (231) network (230) configured such that at least some of the photodetectors (231) receive light beams emitted by the source and diffused by the particles (60) present in the channel (20);
in which
- the detector further comprises at least one optical system (15) configured to be passed through by at least some of the light beams after their diffusion by the particles (60) and before they are received by the photodetectors (231),
- each optical system (15) is associated with a photodetector (231) network (230) and has an image focal plane (151),
- the detector is configured such that said image focal plane (151) of the optical system (15) is optically coupled to the photodetector (231) network (230), such that all the beams diffused by the particles (60) along parallel directions before passing through the optical system (15) reach, after passing through the optical system (15), one same point of the photodetector (231) network (230) associated with this optical system (15),
- the at least one optical system (15) is convergent, so as to make the light beams coming from the source and not diffused by the particles converge towards an image focus located on the image focal plane (151) of the optical system (15),
- said image focal plane (151) of the optical system (15) is optically coupled to the photodetector (231) network (230), such that all the beams diffused by the particles (60) along non-parallel directions before passing through the optical system (15) reach, after passing through the optical system (15) distinct points of the photodetector (231) network (230) associated with this optical system (15) **characterised in that** the detector comprises a plurality of optical systems (15b, 15c, ...), each optical system (15b, 15c, ...) being associated with a photodetector (231) network (230), the plurality of optical systems (15b, 15c, ...) being disposed so as to extend around at least one part of the channel (20).

2. Detector according to the preceding claim, wherein the image focal plane (151) of the optical system (15) is either combined with the photodetectors (231) of the photodetector (231) network (230) associated with this optical system (15), or is located at a distance from the photodetectors (231) of the photodetector (231) network (230) associated with this optical system (15).

3. Detector according to any one of the preceding claims configured such that said image focal plane (151) of the optical system (15) is optically coupled to the photodetector (231) network (230) such that all the beams diffused by a particle (60) along non-parallel directions and along one same diffusion angle, with respect to an optical axis of the system, before passing through the optical system (15) reach, after passing through the optical system (15), distinct points of the photodetector (231) network (230) associated with this optical system (15), these points being located over one same circle.

4. Detector according to any one of the preceding claims, wherein the plurality of optical systems is disposed so as to extend around all of the channel (20), and preferably disposed continuously around all of the channel (20).

5. Detector according to any one of the preceding claims, wherein the photodetectors (231) of the photodetector (231) network (230) are disposed along isovalue curves (232) of diffusion angles.

6. Detector according to any one of the preceding claims, wherein the number N of optical systems is odd, preferably with N = 3, 5 or 7.

7. Detector according to any one of the preceding claims, configured such that a diffusion figure of the particles (60) has an axis of symmetry which coincides with a main propagation direction (105) of the incident light radiation (111a, 111b, 114a, 114b) propagating in the channel (20), and wherein the optical systems (15) of the plurality of optical systems are distributed non-symmetrically with respect to said main propagation direction (105).

8. Detector according to any one of the preceding claims, comprising an optical circuit (100) forming a one-piece assembly, the optical circuit (100) comprising the plurality of optical systems (15) and further having a passage (140) partially forming at least the channel (20), the detector also comprising an optronic circuit (200) comprising a substrate (201) carrying at least one from among the photodetector (231) network (230) and said source (210), the optronic circuit (200) having an opening (250) facing the passage (140), the optical circuit (100) and the optronic circuit (200) being superposed and preferably in contact.

9. Detector according to any one of the preceding claims, wherein the photodetector (231) networks (230) extend, preferably all, in one same plane (231) and wherein the optical systems (15) comprise reflective optics configured to reflect the beams diffused by the particles (60) in the direction of said plane (234).

10. Detector according to any one of the preceding claims, further comprising said at least one source (210) configured to emit said at least one light beam and a substrate (201), and wherein the at least one photodetector (231) network (230) and the source (210) are carried by the substrate (201), preferably by a front face (202) of the substrate (201).

11. Detector according to any one of the preceding claims, wherein the channel (20) extends along a main extension direction (x), wherein the at least one photodetector (231) network (230) extends mainly into a plane (234) (yz) perpendicular to said main extension direction (x) of the channel (20), and the detector comprising said source (210), said source (210) emitting a light radiation along a main emission direction (211) parallel to said main extension direction (x) of the channel (20) and perpendicular to said plane (234) (yz), into which the at least one photodetector (231) network (230) mainly extends.

12. System comprising a detector according to any one of the preceding claims, wherein the system is taken from among:
- an anti-fire alarm system,
- a fire direction system,
- a system for analysing the quality of a fluid such as air or water,
- an anti-pollution alarm system,
- an explosive powder detection system,
- a microbiological species detection system.

13. Method for manufacturing a particle (60) detector according to any one of claims 1 to 11, the method comprising at least the following steps:
- providing at least one optical circuit (100) comprising at least one optical system (15), preferably a plurality of optical systems,
- providing at least one optronic circuit (200) comprising at least one substrate (201) carrying at least one photodetector (231) network (230) and preferably a plurality of photodetector (231) networks (230),
- superposing the optical circuit (100) and the optronic circuit (200) such that said image focal plane (151) of the optical system (15) is optically coupled to the photodetector (231) network (230) such that all the beams diffused by the particles along parallel directions before passing through the optical system (15) reach, after passing through the optical system (15), one same point of the photodetector (231) network (230) associated with this optical system (15).
